# FASCICULE DE BREVET EUROPEEN

(11) **EP 2 334 556 B1**
(45) Date de publication et mention de la délivrance du brevet: **20.07.2016**
(21) Numéro de dépôt: 09747884.6
(22) Date de dépôt: 16.09.2009
(51) Int. Cl.: B64D 29/04, B64D 27/14, B64D 27/00

(54) **PARTIE ARRIERE D'AERONEF COMPRENANT UNE STRUCTURE DE SUPPORT DE MOTEURS TRAVERSANT LE FUSELAGE ET RELIEE A CELUI-CI PAR AU MOINS UNE BIELLE**
FLUGZEUGHECK MIT EINER DEN RUMPF DURCHQUERENDEN UND MIT DIESEM MITTELS EINER STREBE VERBUNDENEN MOTORTRÄGERSTRUKTUR
REAR PART OF AN AIRCRAFT COMPRISING A STRUCTURE FOR SUPPORTING ENGINES, EXTENDING THROUGH THE FUSELAGE AND CONNECTED THERETO BY AT LEAST ONE CONNECTING ROD

(30) Priorité: 18.09.2008 FR 0856299
(43) Date de publication de la demande: 22.06.2011
(73) Titulaire: Airbus Operations (Société par actions simplifiée), 31060 Toulouse (FR)
(72) Inventeur: LAFONT, Laurent, F-31320 Pechbusque (FR); JOURNADE, Frédéric, F-31100 Toulouse (FR); JALBERT, Delphine, F-31840 Seilh (FR); BARDOU, Etienne, F-81220 Saint Paul Cap de Joux (FR)
(74) Mandataire: Ilgart, Jean-Christophe
(86) Numéro de dépôt international: PCT/FR2009/051740
(87) Numéro de publication internationale: WO 2010/031959

(56) Documents cités:
- EP-A- 0 311 155
- WO-A-2007/144377
- WO-A-2009/043924
- GB-A- 724 052

## Description

### DOMAINE TECHNIQUE

La présente invention se rapporte de façon générale à une partie arrière d'aéronef, équipée de moteurs, rapportés sur son fuselage. Une telle partie arrière est connue notamment des documents GB 724 052, EP-A-0 311 155 et WO 2007/144377A.

### ÉTAT DE LA TECHNIQUE ANTÉRIEURE

Pour réaliser une telle partie arrière d'aéronef, il a été proposé, dans l'art antérieur, d'interposer un mât d'accrochage entre le fuselage et chaque moteur. Dans cette configuration, le mât est directement fixé sur le fuselage. Pour assurer de manière satisfaisante le transfert des efforts moteurs vers le fuselage, un dimensionnement important s'avère nécessaire à la fois pour ce mât, pour la partie du fuselage le supportait ainsi que pour les moyens de fixation interposés entre ces éléments. Cela se traduit par de la traînée, pénalisant les performances aérodynamiques globales de l'aéronef.

Une autre solution consiste à prévoir une structure de support des moteurs traversant le fuselage, ainsi que l'espace intérieur de l'aéronef défini par ce fuselage. Au niveau de son passage à travers les deux ouvertures de fuselage, la structure traversante est éclissée au fuselage à l'aide d'une pluralité de boulons ou organes de fixation similaires.

Néanmoins, bien que cette solution permette, par rapport à la solution décrite ci-dessus, de réduire légèrement l'intensité des efforts introduits dans le fuselage au niveau de chacune des deux ouvertures, en particulier les efforts orientés selon la direction de la structure de support, les encadrements d'ouvertures restent encore fortement chargés localement. Il en résulte la nécessité de surdimensionner l'assemblage, en particulier les encadrements d'ouvertures et les portions de fuselage environnantes, au détriment de la masse globale de l'aéronef.

### EXPOSÉ DE L'INVENTION

L'invention a donc pour but de proposer une partie arrière d'aéronef remédiant au moins partiellement à l'inconvénient mentionné ci-dessus, relatif aux réalisations de l'art antérieur.

Pour ce faire, l'invention a pour objet une partie arrière d'aéronef comprenant :
- un fuselage délimitant un espace intérieur de l'aéronef ;
- au moins deux moteurs ;
- une structure de support des moteurs, traversant ledit fuselage au niveau d'une première et d'une seconde ouvertures pratiquées dans celui-ci et réparties de part et d'autre d'un plan médian vertical de l'aéronef, ladite structure de support présentant une première et une seconde extrémités opposées ;
- chacune desdites première et seconde extrémités opposées de la structure de support faisant saillie extérieurement du fuselage, respectivement de part et d'autre dudit plan médian vertical, et portant l'un desdits moteurs ; et
- des moyens d'attache raccordant ladite structure de support au fuselage, comprenant des premiers moyens d'attache raccordant ladite structure à un premier encadrement formant ladite première ouverture de fuselage et des seconds moyens d'attache raccordant ladite structure à un second encadrement formant ladite seconde ouverture de fuselage.

Selon l'invention, les moyens d'attache comprennent de plus au moins une bielle de reprise d'efforts dont une première extrémité est montée sur ladite structure de support, et dont l'extrémité opposée est montée sur le fuselage, à distance des première et seconde ouvertures.

Ainsi, la conception originale proposée par la présente invention permet avantageusement de minimiser l'intensité des efforts transitant par les encadrements d'ouvertures de fuselage, permettant à ces derniers de présenter un dimensionnement moins conséquent que celui rencontré antérieurement. En effet, une partie des efforts provenant du moteur et se dirigeant vers le fuselage n'emprunte plus les encadrements d'ouverture du fuselage, mais transite par la ou les bielles spécifiques à la présente invention, dont le but premier est donc d'introduire des efforts moteurs en des points du fuselage distants des ouvertures. La concentration de contraintes au sein des encadrements d'ouvertures du fuselage est donc sensiblement minimisée.

D'autre part, pour minimiser la concentration de contraintes au sein de la structure de support des moteurs, au droit des ouvertures de fuselage, il est préférentiellement fait en sorte que la première extrémité de bielle soit également montée sur cette structure de support, à distance des ouvertures. La structure moins sollicitée localement peut ainsi présenter un dimensionnement moins important, pour un gain de masse non négligeable.

De préférence, ladite bielle de reprise d'efforts est inclinée par rapport à une direction verticale de l'aéronef, en vue selon une direction longitudinale de ce dernier. Cela lui permet de transférer des efforts selon une direction dont une composante au moins est orientée selon la direction transversale de l'aéronef. Ces efforts transversaux s'avèrent effectivement les plus difficiles à reprendre avec les premiers et seconds moyens d'attache logés dans les ouvertures de fuselage, de sorte que l'orientation précitée de ladite bielle répond à une réelle problématique.

De préférence, il est prévu deux bielles de reprise d'efforts, disposées symétriquement par rapport audit plan médian vertical de l'aéronef. La symétrie réalisée permet avantageusement une certaine compensation dans le reprise des efforts moteurs transitant par les bielles, qui sont de préférence agencées dans un plan transversal de l'aéronef, mais qui pourraient alternativement être inclinées par rapport à un tel plan. Par ailleurs, elles pourraient être prévues en un nombre supérieur à deux, sans sortir du cadre de l'invention.

De préférence, ladite structure de support forme sensiblement un V, et lesdites deux bielles de reprise d'efforts forment ensemble sensiblement un V renversé par rapport à celui de ladite structure de support.

Préférentiellement, lesdites extrémités opposées des deux bielles sont montées sensiblement en un même point sur le fuselage, ledit point appartenant audit plan médian vertical de l'aéronef. Naturellement, elles pourraient être montées en deux points distincts du fuselage, sans sortir du cadre de l'invention.

De préférence, chaque bielle de reprise d'efforts est montée articulée à ses extrémités.

De préférence, chaque bielle de reprise d'efforts est montée au-dessus de ladite structure de support, même si une situation inverse pourrait être envisagée.

De préférence, au moins une bielle de reprise d'efforts est équipée d'un résonateur, afin de filtrer / amortir les vibrations.

De préférence, il est prévu au moins deux bielles de reprise d'efforts articulées sur un palonnier, lui-même articulé sur la structure de support ou sur le fuselage. Cela permet d'équilibrer les efforts transmis par chacune des bielles.

De préférence, ladite structure de support est réalisée à partir d'une première et d'une seconde demi-structures traversant respectivement lesdites première et seconde ouvertures du fuselage, lesdites première et seconde demi-structures étant assemblées l'une à l'autre de manière démontable au sein dudit espace intérieur.

Ainsi, cela permet de grandement faciliter les opérations de montage et de démontage de la structure de support des moteurs, puisque celle-ci est à présent réalisée à partir de deux demi-structures distinctes, assemblées l'une à l'autre de manière réversible. Chacune de ces deux demi-structures peut ainsi être manipulée indépendamment de l'autre lors d'un montage/démontage, rendant le travail plus aisé pour les opérateurs. En particulier, chaque demi-structure de support ne nécessite donc de traverser qu'une seule ouverture de fuselage, impliquant avantageusement une simplification notable pour les opérateurs, aussi bien lors du montage initial que lors d'un remplacement de la structure de support.

De plus, lors d'une opération de montage, chaque demi-structure peut être équipée, à son extrémité, de son moteur, avant d'être insérée dans son ouverture de fuselage correspondante, pour ensuite être assemblée à l'autre demi-structure. Cela simplifie encore davantage le procédé de montage par rapport à celui mis en oeuvre antérieurement avec la solution à structure unique, puisqu'avec cette dernière, le montage des moteurs sur cette structure était possible seulement après la mise en place de cette structure sur le fuselage.

Naturellement, ce dernier avantage est également observé lors d'une opération de démontage de la structure de support des moteurs, étant donné que chaque moteur peut être déposé en restant rattaché à sa demi-structure de support associée.

Enfin, un autre avantage découlant de la réalisation en deux demi-structures réside dans la possibilité de les incliner l'une par rapport à l'autre, lorsqu'elles sont regardées en vue de face, en particulier de façon à ce qu'elles forment un V.

Néanmoins, une structure de support traversante, réalisée d'un seul tenant et traversant les deux ouvertures de fuselage, peut être envisagée sans sortir du cadre de l'invention.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue schématique en perspective d'une partie arrière d'aéronef, selon un mode de réalisation préféré de la présente invention ;
- la figure 2 représente une vue plus détaillée en coupe transversale de la partie arrière d'aéronef montrée sur la figure 1, les moyens d'attache de la structure de support des moteurs sur le fuselage ayant volontairement été omis ;
- la figure 2a schématise le procédé d'assemblage de la partie arrière montrée sur les figures précédentes ;
- la figure 3 représente une vue similaire à celle de la figure 2, sur laquelle ont été représentés des premiers et seconds moyens d'attache de la structure de support des moteurs sur les encadrements formant les ouvertures de fuselage, lesdits premiers et seconds moyens d'attache se présentant sous la forme d'une première forme de réalisation, cette figure correspondant également à une vue en coupe prise le long de la ligne verticale III-III de la figure 4 ;
- la figure 3a représente une première variante de la configuration montrée sur la figure 3 ;
- la figure 3b représente une seconde variante de la configuration montrée sur la figure 3 ;
- la figure 4 représente une vue en coupe selon la ligne verticale IV-IV de la figure 3 ;
- la figure 5 représente une vue similaire à celle de la figure 3, sur laquelle la structure de support des moteurs est réalisée selon une forme alternative ;
- la figure 6 représente une vue similaire à celle de la figure 3, sur laquelle lesdits premiers et seconds moyens d'attache se présentent sous la forme d'une seconde forme de réalisation, cette figure correspondant également à une vue en coupe prise le long de la ligne verticale VI-VI de la figure 7 ;
- la figure 7 représente une vue en coupe selon la ligne verticale VII-VII de la figure 6 ;
- la figure 8 est une vue en perspective de la première demi-structure de support montrée sur les figures 6 et 7 ;
- la figure 9 représente une vue similaire à celle de la figure 6, sur laquelle lesdits premiers et seconds moyens d'attache se présentent sous la forme d'une troisième forme de réalisation, cette figure correspondant également à une vue en coupe prise le long de la ligne verticale IX-IX de la figure 10 ;
- la figure 10 représente une vue en coupe selon la ligne verticale X-X de la figure 9 ;
- la figure 11 représente une vue en coupe schématisant l'un des éléments de blocage appartenant aux premiers moyens d'attache montrés sur les figures 9 et 10 ; et
- la figure 12 représente une vue en coupe schématisant l'un des organes d'amortissement secondaires appartenant aux premiers moyens d'attache montrés sur les figures 9 et 10.

### EXPOSÉ DÉTAILLÉ DE MODES DE RÉALISATION PARTICULIERS

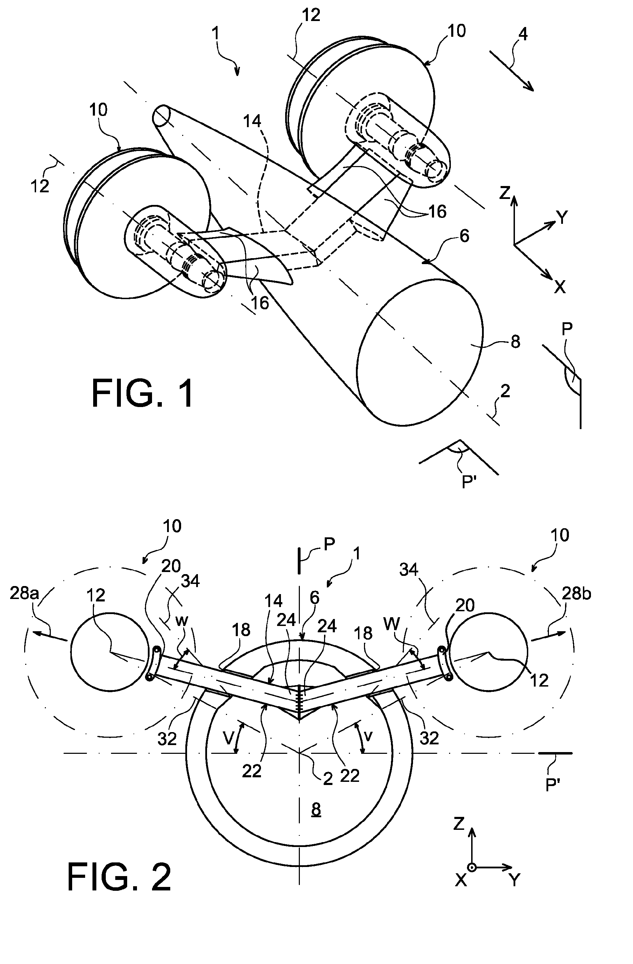

En référence à la figure 1, on voit une partie arrière 1 d'aéronef se présentant sous la forme d'un mode de réalisation préféré de la présente invention.

Dans toute la description qui va suivre, par convention, on appelle X la direction longitudinale de l'aéronef, qui est parallèle à un axe longitudinal 2 de cet aéronef. D'autre part, on appelle Y la direction orientée transversalement par rapport à l'aéronef, et Z la direction verticale ou de la hauteur, ces trois directions X, Y et Z étant orthogonales entre-elles.

D'autre part, les termes « avant » et « arrière » sont à considérer par rapport à une direction d'avancement de l'aéronef rencontrée suite à la poussée exercée par les moteurs, cette direction étant représentée schématiquement par la flèche 4.

Globalement, la partie arrière 1 comprend un fuselage 6, de section transversale sensiblement circulaire, elliptique ou similaire, de centre passant par l'axe longitudinal 2, et délimitant un espace intérieur de l'aéronef 8.

De plus, il comprend au moins deux moteurs 10 disposés de part et d'autre d'un plan médian vertical P passant par l'axe 2. Dans le mode de réalisation préféré, il est prévu deux moteurs 10, un de chaque côté du fuselage 6, ces moteurs pouvant indifféremment être du type turboréacteur, turbopropulseur, ou autre. Chacun d'eux présente un axe longitudinal 12 sensiblement parallèle à la direction X.

Pour assurer la suspension de ces moteurs, il est prévu une structure de support 14, de préférence agencée dans un plan transversal, et qui a la particularité de traverser l'espace intérieur 8 ainsi que le fuselage au niveau de deux ouvertures de celui-ci. Les portions de cette structure 14 qui sont éloignées latéralement du plan P, et qui font saillie extérieurement du fuselage, sont habillées par des carénages aérodynamiques 16, comme visible sur la figure 1.

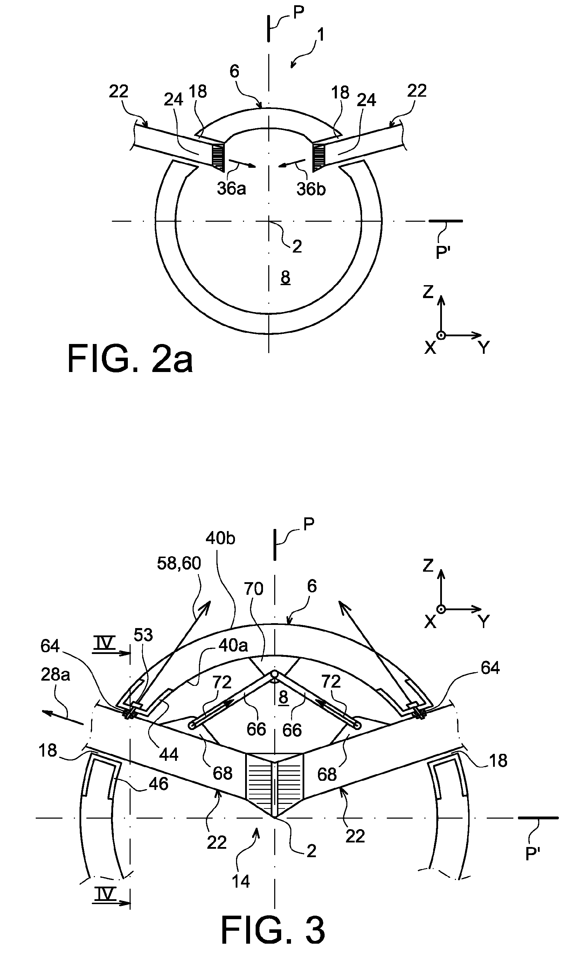

Plus précisément, en référence à la figure 2, on peut apercevoir que la structure de support 14 traverse le fuselage 6 au niveau d'une première et d'une seconde ouvertures pratiquées dans celui-ci, toutes les deux référencées 18. Ces deux ouvertures 18 sont réparties de part et d'autre du plan médian vertical P, et disposées de manière symétrique par rapport à ce dernier, qui constitue par ailleurs sensiblement un plan de symétrie pour l'ensemble de la partie arrière de l'aéronef.

La structure de support 14 présente une première et une seconde extrémités opposées, toutes les deux référencées 20, chacune faisant saillie extérieurement du fuselage, respectivement de part et d'autre du plan P, et portant l'un des moteurs 10.

Chaque extrémité 20 peut ainsi être assimilée à une structure rigide de mât d'accrochage 4, par exemple de conception identique ou similaire à celles connues de l'art antérieur pour suspendre un moteur sous une voilure, et assurant donc le transfert des efforts moteurs vers la structure de l'aéronef.

Dans ce mode préféré, la structure de support 14 des moteurs est réalisée à partir d'une première et d'une seconde demi-structures, toutes les deux référencées 22, et traversant respectivement les première et seconde ouvertures du fuselage 18, 18.

De plus, elles sont assemblées l'une à l'autre de manière démontable au sein de l'espace intérieur 8. Pour ce faire, la première demi-structure 22 présente une extrémité intérieure 24 opposée à la première extrémité 20, et la seconde demi-structure 22 présente une autre extrémité intérieure 24 opposée à la seconde extrémité 20, les deux extrémités intérieure 24, 24 étant donc en contact et assemblées entre elles de manière démontable au sein de l'espace intérieur 8, grâce par exemple à des boulons et/ou des pions de cisaillement (non représentés).

De préférence, la jonction entre les deux demi-structures 22, 22 s'effectue au niveau du plan P dans lequel se trouve l'interface de fixation, les boulons et/ou les pions étant de ce fait traversés par le plan P. D'une manière générale, ce plan P constitue un plan de symétrie pour la structure de support des moteurs 14, qui, en vue de face telle que celle montrée sur la figure 2, forme sensiblement un V.

En effet, la première demi-structure 22, considérée comme celle de gauche sur cette figure 2, est inclinée par rapport à la direction Y en allant vers le haut en s'écartant du plan P, de même que la seconde demi-structure 22, considérée comme celle de droite sur cette figure 2, est également inclinée par rapport à la direction Y en allant vers le haut en s'écartant du plan P. La première demi-structure 22 s'étend donc selon une première direction 28a inclinée par rapport aux directions Y et Z dans un plan transversal, alors que la seconde demi-structure 22 s'étend selon une seconde direction 28b également inclinée par rapport aux directions Y et Z dans le même plan transversal.

Chaque demi-structure 22, 22 prend la forme d'une poutre ou d'un caisson s'étendant de manière sensiblement rectiligne dans sa direction associée 28a, 28b, de son extrémité intérieure 24 agencée dans le plan P, jusqu'à son extrémité opposée 20, 20 portant l'un des moteurs 10.

Dans le mode de réalisation préféré, le V formé par la structure 14 s'ouvre vers le haut, et sa pointe est agencée au-dessus de l'axe longitudinal 2. La liberté de positionnement de la pointe du V ainsi que la liberté de fixation de la valeur de l'angle de ce V permettent de s'adapter au mieux aux différentes contraintes existantes, et en particulier permettent de faire en sorte de limiter au mieux les perturbations aérodynamiques rencontrées au niveau des portions extérieures des demi-structures 22, 22.

En effet, la structure de support est conçue de sorte qu'en vue de face, pour chaque demi-structure :
- un angle aigu (v) entre un plan médian horizontal du fuselage P', et une droite 32 reliant l'axe 2 du fuselage et l'axe longitudinal 12 du moteur, est supérieur à 25° ; et
- un angle aigu (w) entre la direction 28a, 28b selon laquelle s'étend ladite demi-structure, et la direction 34 normale au fuselage au niveau du passage de cette demi-structure, est inférieur à 20°.

Cette valeur relativement importante de l'angle (v) permet de disposer les moteurs à la hauteur souhaitée par rapport au fuselage, avec par exemple les axes moteurs 12 situés dans un plan horizontal proche d'une extrémité haute du fuselage, tandis que la valeur relativement faible de l'angle (w), traduisant un écartement entre le fuselage et chaque demi-structure, permet de s'affranchir de la présence d'un carénage aérodynamique additionnel.

La conception décrite ci-dessus permet un montage et un démontage aisés de la structure de support 14. En effet, en référence à la figure 2a schématisant un procédé d'assemblage de la partie arrière d'aéronef 1, on peut apercevoir que ce procédé comporte l'étape de mise en place de la première demi-structure 22, par déplacement de celle-ci visant à lui faire traverser la première ouverture de fuselage 18 avec son extrémité intérieure 24 placée vers l'avant dans le sens de déplacement 36a, correspondant par exemple à la première direction 28a dans laquelle s'étend cette première demi-structure une fois installée.

Simultanément ou successivement, il est mis en oeuvre une étape de mise en place de la seconde demi-structure 22, par déplacement de celle-ci visant à lui faire traverser la seconde ouverture de fuselage 18 avec son extrémité intérieure 24 placée vers l'avant dans le sens de déplacement 36b, correspondant par exemple à la seconde direction 28b dans laquelle s'étend cette seconde demi-structure une fois installée.

Lors de chacune de ces deux étapes, le moteur 10 peut déjà être installé sur l'extrémité extérieure 20 (non représentée sur la figure 2a), afin de simplifier et d'écourter le procédé d'assemblage.

De plus, il est fait en sorte que les extrémités intérieures 24, 24 soient dimensionnées pour passer à travers leurs ouvertures de fuselage respectives 18, 18, de préférence même en étant équipées de leurs moyens de renfort dédiés à l'assemblage des deux demi-structures, tels que des nervures ou similaires. Alternativement, ces moyens de renfort peuvent être montés sur les extrémités intérieures 24, 24 seulement après que celles-ci aient traversé les ouvertures 18, 18.

D'une manière générale, il est prévu que dans un plan médian d'ouverture, le rapport entre la hauteur de l'ouverture et la hauteur d'une demi-structure, soit compris entre 1,3 et 2. En outre, dans ce même plan, le rapport entre la profondeur de l'ouverture et la profondeur d'une demi-structure, selon la direction X, est compris entre 1,1 et 1,5.

Ensuite, il est procédé à l'assemblage de l'extrémité intérieure 24 de la première demi-structure 22 sur l'extrémité intérieure 24 de ladite seconde demi-structure 22, à l'aide des moyens de liaison précités, qui sont de préférence orientés selon la direction Y.

Des moyens d'attache sont prévus entre le fuselage et la structure de support des moteurs.

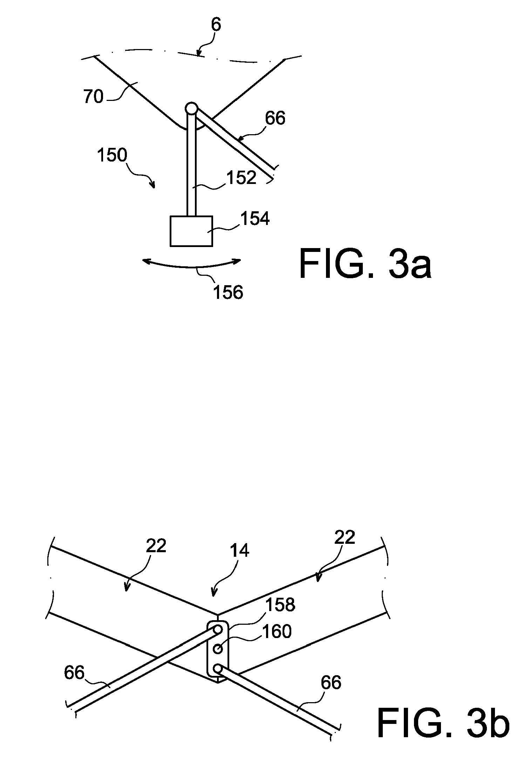

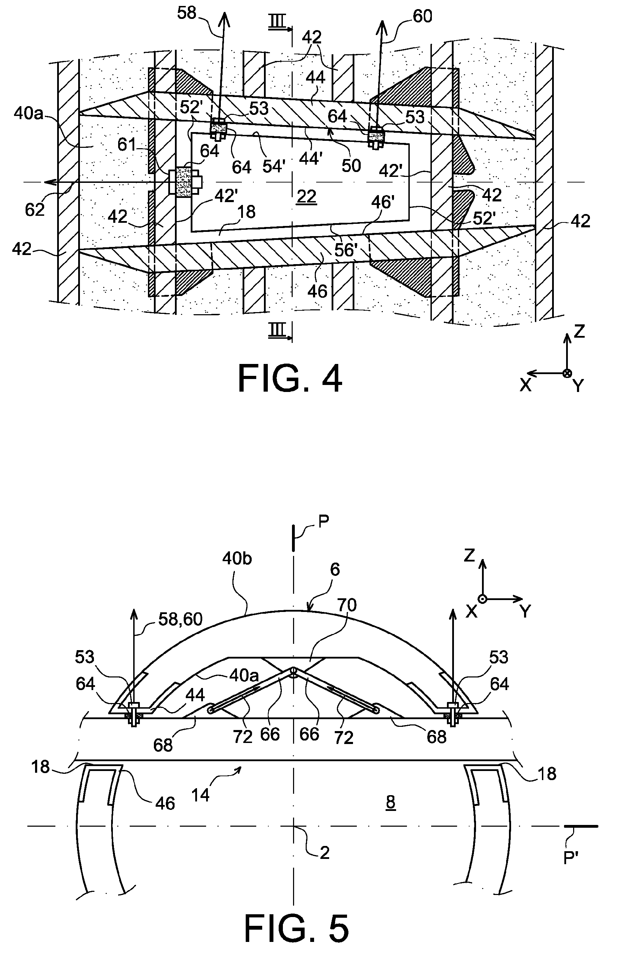

Une première forme de réalisation est montrée sur les figures 3 et 4.

Ces moyens comprennent tout d'abord des premiers moyens d'attache raccordant la première demi-structure à un premier encadrement formant la première ouverture de fuselage, ainsi que des seconds moyens d'attache raccordant la seconde demi-structure à un second encadrement formant la seconde ouverture de fuselage. Les premiers et seconds moyens d'attache étant de conception sensiblement identique, et symétriques par rapport au plan P, seuls les premiers moyens seront décrits ci-après.

Tout d'abord, il est noté que la première ouverture 18, de conception identique ou similaire à celle de la seconde ouverture 18, est réalisée à l'aide d'un passage dans la peau intérieure de fuselage 40a, et d'un autre passage en regard, dans la peau extérieure de fuselage 40b. Ces deux passages forment respectivement l'entrée de l'ouverture 18, et la sortie de cette même ouverture.

L'ouverture est délimitée vers l'avant par un cadre de fuselage avant 42, et vers l'arrière par un autre cadre de fuselage arrière 42. Comme visible sur la figure 4, d'autres cadres de fuselage 42 situés entre les deux précités peuvent être tronçonnés en vue de faire apparaître l'ouverture 18. Par ailleurs, l'ouverture est délimitée vers le haut par une traverse supérieure de fermeture 44, qui s'étend de préférence selon la direction X sur toute l'épaisseur du fuselage, et qui relie les deux cadres de fuselage avant et arrière 42, 42. De la même manière, l'ouverture 18 est délimitée vers le bas par une traverse inférieure de fermeture 46, qui s'étend de préférence selon la direction X sur toute l'épaisseur du fuselage, et qui relie les deux cadres de fuselage avant et arrière 42, 42. Les quatre éléments 42, 42, 44, 46 forment ensemble le premier encadrement 50 définissant l'ouverture 18.

Ainsi, dans le plan vertical défini par la ligne IV-IV de la figure 3, tout comme dans le plan médian d'ouverture, assimilable au plan orthogonal à la demi-structure 22 et traversant l'ouverture sensiblement en son milieu entre son entrée et sa sortie, l'encadrement 50 présente la forme d'un quadrilatère à l'aide de ses quatre faces 42', 42', 44', 46' définies respectivement par les éléments précités 42, 42, 44, 46. Dans ces mêmes plans, les quatre faces de la demi-structure 22 forment également un quadrilatère, avec les faces de la demi-structure et de l'ouverture étant en regard deux à deux. Par conséquent, la face avant 52' de la demi-structure est en regard de la face avant 42' de l'encadrement, la face arrière 52' de la demi-structure est en regard de la face arrière 42' de l'encadrement, la face supérieure 54' de la demi-structure est en regard de la face supérieure 44' de l'encadrement, et la face inférieure 56' de la demi-structure est en regard de la face inférieure 46' de l'encadrement.

Les premiers moyens d'attache, assurant le montage de la première demi-structure 22 sur le premier encadrement 50, comportent tout d'abord une pluralité de boulons 53 sensiblement orthogonaux à la direction 28a de la demi-structure 22 et agencés dans des plans YZ, permettant l'accrochage de la face supérieure 54' sur la face supérieure 44' de l'encadrement. Ainsi, un ou plusieurs boulons disposés en rangées sont prévus à deux emplacements différents de la demi-structure 22, espacés selon la direction X. Cela permet d'assurer la reprise des efforts selon la direction orthogonale à la direction 28a, dans des plans YZ, comme cela est schématisé par les deux flèches 58, 60. En d'autres termes, ces boulons 53 permettent la reprise des efforts dans le plan médian d'ouverture ou dans un plan parallèle à celui-ci.

De manière analogue, les premiers moyens d'attache comportent un ou une pluralité de boulons 61 sensiblement orthogonaux à la direction 28a de la demi-structure 22 et agencés dans un ou des plans XZ, permettant l'accrochage de la face avant 52' sur la face avant 42' de l'encadrement. Ainsi, de préférence un boulon 61 est prévu sur la demi-structure 22, permettant d'assurer la reprise des efforts selon la direction orthogonale à la direction 28a, dans un plan XZ, comme cela est schématisé par la flèche 62 de la figure 4. En d'autres termes, ce boulon 61 permet également la reprise des efforts dans le plan médian d'ouverture ou dans un plan parallèle à celui-ci, et plus préférentiellement la reprise des efforts dans la direction X selon laquelle s'étend ce boulon 61.

Alternativement, il pourrait être possible de plaquer la demi-structure 22 sur l'encadrement 50 autrement que sur les faces avant 42' et supérieure 44' de celui-ci. Il est effectivement de préférence recherché à plaquer cette demi-structure 22 sur deux faces jointives de l'encadrement, qui pourraient donc, selon une alternative parmi d'autres, être la face inférieure 46' et la face arrière 42'.

Chaque boulon 53, 61, ou rangée de boulons, est de préférence prévu pour former une attache souple.

Cela est par exemple réalisé avec un ou plusieurs organes d'amortissement, comme des organes en matériau polymère à déformation élastique, par exemple du type en élastomère ou caoutchouc, permettant d'amortir les vibrations et participant donc à isoler, d'un point de vue vibratoire, le fuselage vis-à-vis du moteur. Cette organe d'amortissement prend ici de préférence la forme d'un bloc élastomère 64 comprimé entre les faces assemblées deux à deux 42', 52' et 44', 54', la compression résultant de l'effort de traction introduit dans le boulon 53, 61 traversant ce bloc, du fait de l'effort de serrage. Néanmoins, si cette solution est préférée en raison des propriétés d'amortissement de vibrations qu'elle procure, il pourrait alternativement être envisagé un contact rigide et direct entre les faces assemblées deux à deux 42', 52' et 44', 54', sans sortir du cadre de l'invention.

En référence plus précisément à la figure 3, on peut voir que les premiers et seconds moyens d'attache sont complétés par la présence d'une ou plusieurs bielles de reprise d'efforts, spécifiques à la présente invention. Cela permet globalement de minimiser l'intensité des efforts transitant par les encadrements d'ouvertures 50, permettant à ces derniers de présenter un dimensionnement moins conséquent que celui rencontré antérieurement.

Dans le mode représenté, il est prévu deux bielles 66 disposées symétriquement par rapport au plan P, chacune de ces bielles présentant une première extrémité, ou extrémité basse, montée sur la demi-structure de support 22, et dont l'extrémité opposée, ou extrémité haute, est montée sur le fuselage à distance des ouvertures 18.

En raison de la symétrie adoptée, seule la bielle 66 de gauche sur la figure 3, à savoir celle qui complète les premiers moyens d'attache, va être décrite.

Pour minimiser la concentration de contraintes au sein de la demi-structure de support 22, au droit de l'ouverture 18, il est préférentiellement fait en sorte que la première extrémité de bielle soit également montée sur cette structure de support à distance des ouvertures, de préférence donc au sein de l'espace intérieur 8. Cette première extrémité est de préférence montée articulée sur la demi-structure 22, par exemple à l'aide d'une ferrure 68 solidaire de cette dernière.

Elle s'étend ensuite en se rapprochant du plan vertical médian P, dans lequel son extrémité opposée est montée sur le fuselage, de préférence sur une portion supérieure de celui-ci comme cela a été représenté. Ici encore, la liaison est de préférence du type articulé, à l'aide d'une ferrure 70 ou extension de cadre de fuselage faisant saillie en direction de l'espace intérieur.

Les deux bielles de reprise d'efforts, qui sont de préférence agencées dans un plan transversal et dont les extrémités opposées sont montées sensiblement en un même point du plan P sur le fuselage, forment ensemble sensiblement un V renversé par rapport à celui de la structure de support 14.

Néanmoins, la position et l'orientation des bielles pourraient être modifiées en fonction des besoins rencontrés. A cet égard, les bielles pourraient être agencées au-dessous de la structure 14, et non au-dessus comme représenté.

D'une façon générale, il est tout de même fait de préférence en sorte que chaque bielle de reprise d'efforts 66 soit inclinée par rapport à la direction Z, en vue selon la direction X telle que celle de la figure 3. Cela lui permet de transférer des efforts selon une direction dont une composante au moins est orientée selon la direction Y, ces efforts transversaux s'avérant en effet les plus difficiles à reprendre avec les premiers moyens d'attache logés dans l'ouverture de fuselage 18.

Dans le mode représenté, chaque bielle 66 est sensiblement inclinée par rapport aux directions Y et Z, de manière à s'élever en allant vers l'intérieur. Les efforts s'exerçant selon ces deux directions de bielles, schématisés par les deux flèches 72 de la figure 3, peuvent donc être parfaitement repris par les moyens d'attache. Néanmoins, une solution alternative, parmi d'autres, aurait pu être d'orienter chaque bielle 66 selon la direction Y, sans sortir du cadre de l'invention.

Plusieurs bielles 66 telles que celles montrées sur la figure 3 peuvent être prévues entre la structure de support 14 et le fuselage 6, leur nombre n'étant donc pas limité à un ou deux. En outre, l'une ou plusieurs d'entre elles peuvent chacune être remplacée par un vérin amortisseur (non représenté), capable d'amortir / de filtrer les vibrations susceptibles d'être transmises au fuselage.

Toujours dans ce même but d'amortir / de filtrer les vibrations susceptibles d'être transmises par les bielles 66 au fuselage, il est possible d'équiper au moins l'une d'entre elles d'un résonateur, dont un exemple est montré sur la figure 3a. Sur cette figure, le résonateur équipe l'extrémité de la bielle qui est raccordée à la ferrure 70 du fuselage 6. Le résonateur 150, s'étendant verticalement, comporte un batteur 152 raccordé à cette extrémité de bielle par l'une de ses extrémités, tandis que son autre extrémité porte une masse 154. L'amortissement des vibrations transmises au fuselage par la bielle s'effectue par un mouvement oscillatoire de la masse 154 autour de l'axe d'articulation de la bielle sur la ferrure 70 du fuselage, à savoir l'axe d'articulation du batteur sur la ferrure 70, comme montré schématiquement par la flèche 156 de la figure 3a.

En outre, comme mentionné ci-dessus, la disposition des bielles 66 peut être adaptée en fonction des besoins et contraintes rencontrés. Sur la figure 3b, les deux bielles 66 disposent chacune d'une extrémité extérieure (non représentée) rapportée de manière préférentiellement articulée sur le fuselage, de préférence en partie latérale de celui-ci, et d'une extrémité intérieure rapportée de manière articulée sur un palonnier 158, lui-même articulé sur la structure de support 14, de préférence en son milieu. Ainsi, les extrémités intérieures des deux bielles 66 étant raccordées de part et d'autre de l'axe d'articulation 160 du palonnier, de préférence orienté selon la direction X, les efforts introduits par chacune des bielles 66 peuvent donc être équilibrés. En outre, cette adjonction d'un palonnier facilite grandement le montage, étant donné qu'il élimine le degré d'hyperstatisme amené par la configuration à deux bielles. Bien que cela ne soit pas limitatif, la figure 3b montre une configuration dans laquelle le V formé par les deux bielles 66 est ouvert vers le bas, et agencé globalement en-dessous de la structure de support 14.

Alternativement, le palonnier 158 reliant les deux extrémités de bielles pourrait être articulé sur le fuselage et non la structure de support, par exemple sur la ferrure de fuselage 70 décrite en relation avec la figure 3.

En référence à la figure 5, on peut voir un mode de réalisation dans lequel les moyens d'attache décrits précédemment sont conservés, seule la structure de support des moteurs 14 présentant une conception différente. En effet, celle-ci n'est plus réalisée en deux demi-structures rapportées l'une sur l'autre, mais en une seule structure, de préférence rectiligne et transversale, traversant les deux ouvertures 18, 18. Il est noté que ce type de structure peut être employé quelque soit la nature des moyens d'attache retenue. En particulier, elle s'applique pour les autres formes préférées des moyens d'attache, qui vont être décrites ci-dessous.

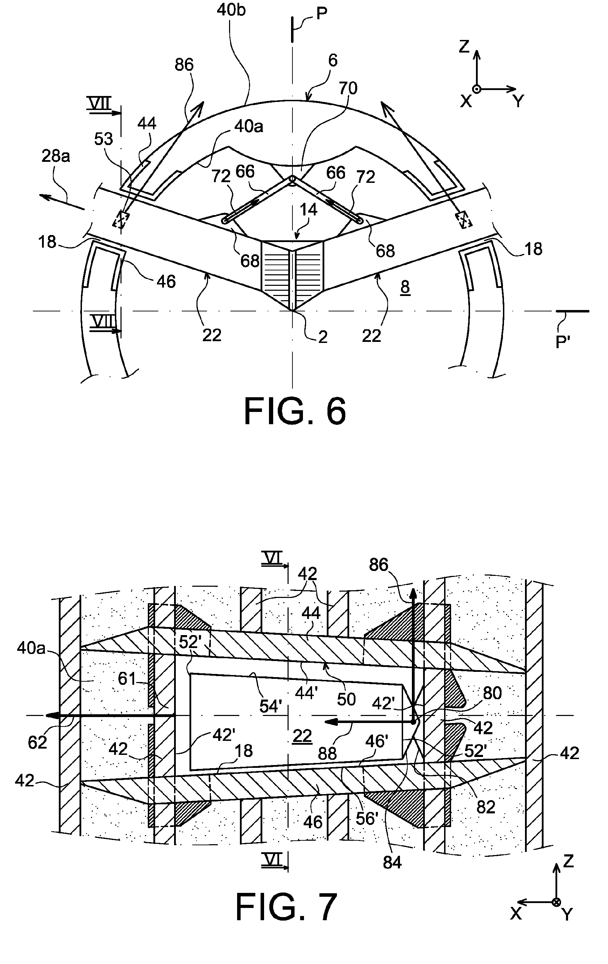

En référence à présent aux figures 6 à 8, on peut voir un autre mode préféré dans lequel chacun des premiers et seconds moyens d'attache se présente sous la forme d'une seconde forme de réalisation, les bielles de reprise d'efforts 66 étant ici conservées.

En effet, les premiers moyens d'attache, qui seront les seuls décrits en raison de leur identité et de leur symétrie avec les seconds moyens d'attache, comprennent à présent une liaison du type articulation entre la face arrière 52' de la demi-structure 22 et la face arrière 42' de l'encadrement. Pour ce faire, un axe 80 parallèle à la direction 28a relie une chape 82 et une ferrure 84 respectivement solidaires des faces en regard 42', 52', ou inversement. De préférence, les autres faces de la demi-structure 22 et de l'encadrement 50 restent dépourvues de moyens de liaison, mais toujours en regard deux à deux.

La liaison obtenue assure la reprise des efforts selon la direction orthogonale à la direction 28a, dans un plan YZ, comme cela est schématisé par la flèche 86, ainsi que la reprise des efforts selon la direction orthogonale à la direction 28a, dans un plan XZ, comme cela est schématisé par la flèche 88. En d'autres termes, cette liaison à axe 80 permet la reprise des efforts dans le plan médian d'ouverture ou dans un plan parallèle à celui-ci, selon deux directions orthogonales entre elles, dont de préférence la direction X comme en témoigne la flèche 88.

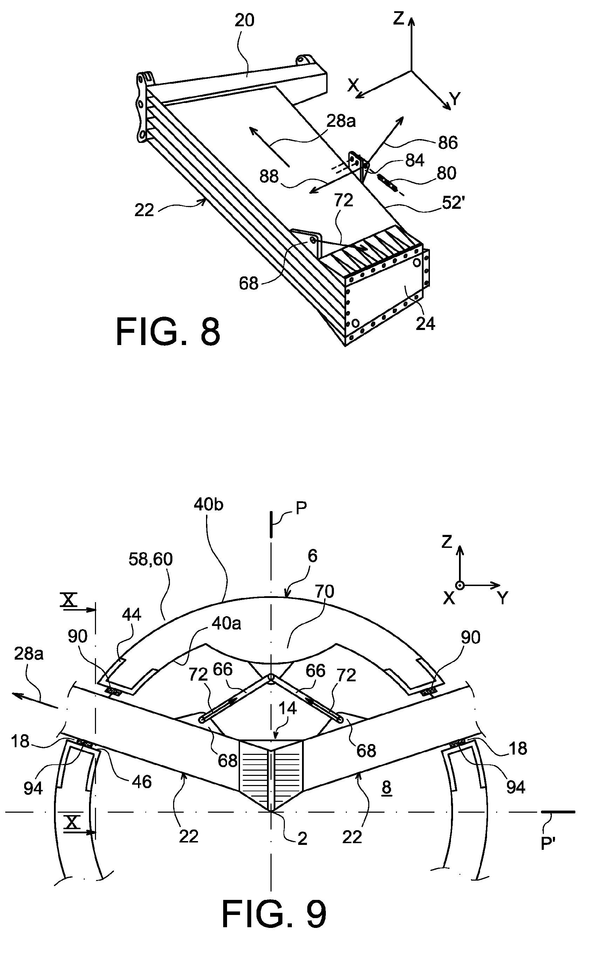

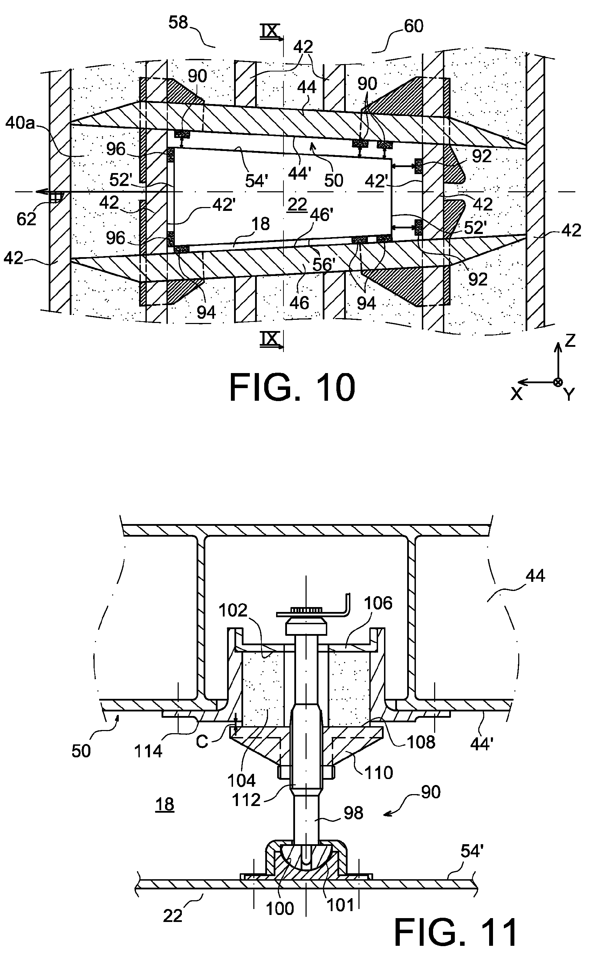

En référence à présent aux figures 9 et 10, on peut voir un autre mode préféré dans lequel chacun des premiers et seconds moyens d'attache se présente sous la forme d'une troisième forme de réalisation, les bielles de reprise d'efforts 66 étant ici aussi conservées.

Les premiers et seconds moyens d'attache étant de conception sensiblement identique, et symétriques par rapport au plan P, seuls les premiers moyens seront décrits ci-après.

Dans cette troisième forme de réalisation, les premiers moyens d'attache comprennent au moins un élément de blocage de la structure de support, sollicité en compression en étant en appui d'une part sur le premier encadrement 50, et d'autre part sur la demi-structure de support 22. Dans cette configuration, les premiers moyens d'attache sont au moins partiellement constitués à l'aide d'éléments de blocage qui travaillent en compression, et non plus en traction comme cela était le cas pour les éléments conventionnels de l'art antérieur, du type boulons ou similaires. Il en résulte une facilité de mise en place de ces éléments de blocage, car ces derniers peuvent se situer entièrement dans les ouvertures de fuselage 18, sans avoir à traverser les encadrements 50 ni la demi-structure de support 22.

D'une manière générale, chaque élément de blocage, référencé 90, 92, est sollicité en compression de manière à exercer un effort sur une face donnée de la structure, qui conduit la face opposée à cette face donnée, à venir en appui avec ou sans contact sur la face de l'encadrement lui étant en regard. Ainsi, dans le mode représenté, il est prévu des éléments de blocage 90, 92 sollicités en compression respectivement selon deux directions distinctes, inscrites dans le plan médian d'ouverture, cela suffisant à maintenir la demi-structure 22 par rapport à l'encadrement 50 dans toutes les directions de ce plan médian de l'ouverture de fuselage.

Plus précisément, les premiers moyens d'attache comprennent des éléments de blocage 90 représentés schématiquement sur les figures 9 et 10, ces éléments 90 sollicités en compression étant en appui sur la face supérieure 54' de la demi-structure, et sur la face supérieure 44' de l'encadrement. Ainsi, un ou plusieurs de ces éléments 90 disposés en rangées sont prévus à deux ou plusieurs emplacements différents de la demi-structure 22, espacés selon la direction X. Cela permet d'assurer la reprise des efforts selon la direction orthogonale à la direction 28a, dans des plans YZ. En d'autres termes, ces éléments de blocage 90 permettent la reprise des efforts dans le plan médian d'ouverture ou dans un plan parallèle à celui-ci.

De manière analogue, les premiers moyens d'attache comprennent des éléments de blocage 92 représentés schématiquement sur la figure 10, ces éléments 92 sollicités en compression étant en appui entre la face arrière 52' de la demi-structure, et la face arrière 42' de l'encadrement. Ainsi, un ou plusieurs de ces éléments 92 disposés en rangées sont prévus à deux ou plusieurs emplacements différents de la demi-structure 22, espacés selon la direction Z. Cela permet d'assurer la reprise des efforts selon la direction orthogonale à la direction 28a, dans un plan XZ. En d'autres termes, ces éléments 92 permettent également la reprise des efforts dans le plan médian d'ouverture ou dans un plan parallèle à celui-ci, et plus préférentiellement la reprise des efforts dans la direction X.

Ici, les éléments de blocage 90, 92 sont placés sur la face arrière 42' et la face supérieure 44', afin de plaquer la face avant 52' contre la face avant 42' de l'encadrement, et afin de plaquer la face inférieure 56' contre la face inférieure 46' de l'encadrement. Alternativement, il pourrait être possible de placer les éléments de blocage 90, 92 autrement que sur les faces arrière 42' et supérieure 44' de l'encadrement. Il est effectivement de préférence recherché à plaquer cette demi-structure 22 sur deux faces jointives de l'encadrement, qui pourraient donc, selon une alternative parmi d'autres, être les faces arrière 42' et supérieure 44', en plaçant les éléments de blocage sollicités en compression sur les faces avant 42' et inférieure 46'.

Chaque élément de blocage 90, 92, ou rangée d'éléments, est de préférence prévu pour former une attache souple, à l'aide d'un organe d'amortissement, comme cela sera détaillé ci-après.

Par ailleurs, des organes d'amortissement secondaires 94, 96 sont interposés entre les deux autres faces jointives 42', 46' de la demi-structure de support, et l'encadrement 50. Les organes d'amortissement secondaires font qu'il n'existe pas de contact direct entre la structure de support et les encadrements, même si de tels contacts directs pourraient être envisagés. Lorsque de tels organes d'amortissement et organes d'amortissement secondaires ne sont pas prévus, il est alors obtenu un assemblage dit rigide entre la structure de support et les encadrements.

Néanmoins, comme cela est le cas dans le mode représenté, chaque élément de blocage est en appui sur ladite structure de support et/ou sur son encadrement associé, via un organe d'amortissement. Cela permet avantageusement de procurer, comme mentionné ci-dessus, une certaine souplesse aux premiers et seconds moyens d'attache, réduisant les vibrations dans le fuselage. En d'autres termes, les organes d'amortissement, préférentiellement en matériau polymère à déformation élastique, par exemple du type en élastomère ou caoutchouc, permettent avantageusement d'amortir les vibrations, et participent donc à isoler, d'un point de vue vibratoire, le fuselage vis-à-vis du moteur. Ici encore, alternativement, d'autres organes d'amortissement du type ressort peuvent être employés.

La figure 11 montre une réalisation possible pour chacun des éléments de blocage 90, 92, intégrant un tel élément amortisseur.

Sur cette figure, on peut voir que l'élément de blocage 90 comprend un organe en forme d'une tige 98 orientée sensiblement orthogonalement aux faces 44', 54' qu'elle relie. L'extrémité de cette tige 98 coopérant avec la face 54' de la demi-structure est en appui dans un logement 100 prévu sur cette face. Cette extrémité formant première surface d'appui 101 peut être bombée et de forme complémentaire de celle du logement 100, pour un meilleur maintien de l'appui. Sur la face supérieure 44' de la traverse 44, il est prévu un logement 102 recevant l'organe d'amortissement 104, en forme par exemple de bloc élastomère. Le fond du logement 102 est constitué par un écrou amovible 106 autorisant le remplacement du bloc élastomère 104 sans avoir à retirer la tige 98, qui elle traverse chacun des éléments 104, 106 comme montré sur la figure 11.

Afin d'appliquer un effort de compression dans la tige, celle-ci présente une autre surface d'appui 108 en contact avec le bloc élastomère 104, et plus précisément avec la face de ce bloc qui est opposée à la face reposant dans le fond du logement 102. Cette surface d'appui 108 peut être prévue sur un organe de serrage 110 monté vissé sur une portion filetée 112 de la tige 98. Cela permet avantageusement de constituer des moyens de réglage de l'écartement entre les deux surfaces d'appui 101, 108, respectivement en appui sur la structure de support et sur l'encadrement. Cette fonctionnalité permet non seulement de faciliter la mise en place de l'élément de blocage 90 dans l'ouverture, mais également de lui appliquer une précontrainte en compression d'une valeur souhaitée, en vissant l'organe de serrage 110.

Par ailleurs, il est de préférence fait en sorte que l'organe d'amortissement 104 puisse se comprimer seulement sur une course d'écrasement C limitée, au-delà de laquelle un contact rigide entre la structure et l'encadrement interdit la poursuite de l'écrasement. Ce contact est par exemple obtenu par la mise en butée de la surface d'appui 108 contre la surface 114 délimitant l'ouverture du logement 102 recevant le bloc élastomère 104.

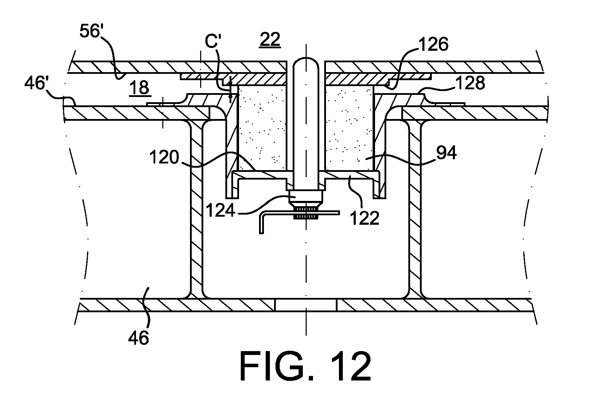

La figure 12 montre une réalisation possible pour chacune des liaisons intégrant un organe d'amortisseur secondaire 94, 96.

Sur cette figure, on peut voir que sur la face inférieure 46' de la traverse 46, il est prévu un logement 120 recevant l'organe d'amortissement secondaire 94, en forme par exemple de bloc élastomère. Le fond du logement 120 est constitué par un écrou amovible 122 autorisant un remplacement aisé du bloc élastomère 94, par exemple en dévissant l'écrou grâce à un axe 124 lui étant solidaire.

Le bloc 94 est donc en appui dans le fond du logement 120, ainsi qu'en appui sur une surface dédiée 126 de la face 56'. Il est de ce fait comprimé entre ces deux appuis.

Par ailleurs, il est de préférence fait en sorte que l'organe d'amortissement secondaire 94 puisse se comprimer seulement sur une course d'écrasement C' limitée, au-delà de laquelle un contact rigide entre la structure et l'encadrement interdit la poursuite de l'écrasement. Ce contact est par exemple obtenu par la mise en butée de la surface 126 contre la surface 128 délimitant l'ouverture du logement 120 recevant le bloc élastomère 94.

Par conséquent, on en déduit que les premiers moyens d'attache assurant le montage de la demi-structure 22 dans l'encadrement 50 sont exclusivement des éléments sollicités en compression.

Comme mentionné ci-dessus, les premiers et seconds moyens d'attache sont complétés par les bielles de reprise d'efforts 66.

Bien entendu, diverses modifications peuvent être apportées par l'homme du métier à l'invention qui vient d'être décrite, uniquement à titre d'exemples non limitatifs. A cet égard, il est noté que chaque caractéristique décrite en relation avec un mode de réalisation donné est susceptible de s'appliquer à l'ensemble des autres modes de réalisation envisagés dans le cadre des revendications.

## Revendications

1. Partie arrière d'aéronef (1) comprenant :
- un fuselage (6) délimitant un espace intérieur de l'aéronef (8) ;
- au moins deux moteurs (10) ;
- une structure de support des moteurs (14), traversant ledit fuselage au niveau d'une première et d'une seconde ouvertures (18, 18) pratiquées dans celui-ci et réparties de part et d'autre d'un plan médian vertical (P) de l'aéronef, ladite structure de support présentant une première et une seconde extrémités opposées (20, 20) ;
- chacune desdites première et seconde extrémités opposées de la structure de support faisant saillie extérieurement du fuselage, respectivement de part et d'autre dudit plan médian vertical, et portant l'un desdits moteurs ; et
- des moyens d'attache raccordant ladite structure de support (14) au fuselage (6), comprenant des premiers moyens d'attache raccordant ladite structure à un premier encadrement (50) formant ladite première ouverture de fuselage (18) et des seconds moyens d'attache raccordant ladite structure à un second encadrement (50) formant ladite seconde ouverture de fuselage (18) ;
**caractérisée en ce que**
lesdits moyens d'attache comprennent de plus au moins une bielle de reprise d'efforts (66) dont une première extrémité est montée sur ladite structure de support (14), et dont l'extrémité opposée est montée sur le fuselage (6), à distance des première et seconde ouvertures (18, 18).

2. Partie arrière d'aéronef selon la revendication 1, **caractérisée en ce que** ladite bielle de reprise d'efforts (66) est inclinée par rapport à une direction verticale (Z) de l'aéronef, en vue selon une direction longitudinale (X) de ce dernier.

3. Partie arrière d'aéronef selon la revendication 1 ou la revendication 2, **caractérisée en ce qu'**il est prévu deux bielles de reprise d'efforts (66, 66), disposées symétriquement par rapport audit plan médian vertical (P) de l'aéronef.

4. Partie arrière d'aéronef selon la revendication 3, **caractérisée en ce que** ladite structure de support (14) forme sensiblement un V, et **en ce que** lesdites deux bielles de reprise d'efforts (66, 66) forment ensemble sensiblement un V renversé par rapport à celui de ladite structure de support.

5. Partie arrière d'aéronef selon la revendication 3 ou la revendication 4, **caractérisée en ce que** lesdites extrémités opposées des deux bielles (66, 66) sont montées sensiblement en un même point sur le fuselage (6), ledit point appartenant audit plan médian vertical de l'aéronef.

6. Partie arrière d'aéronef selon l'une quelconque des revendications précédentes, **caractérisée en ce que** chaque bielle de reprise d'efforts (66) est montée articulée à ses extrémités.

7. Partie arrière d'aéronef selon l'une quelconque des revendications précédentes, **caractérisée en ce que** chaque bielle de reprise d'efforts (66) est montée au-dessus de ladite structure de support.

8. Partie arrière d'aéronef selon l'une quelconque des revendications précédentes, **caractérisée en ce qu'**au moins une bielle de reprise d'efforts (66) est équipée d'un résonateur (150).

9. Partie arrière d'aéronef selon l'une quelconque des revendications précédentes, **caractérisée en ce qu'**il est prévu au moins deux bielles de reprise d'efforts (66) articulées sur un palonnier (158) lui-même articulé sur la structure de support (14) ou sur le fuselage (6).

10. Partie arrière d'aéronef selon l'une quelconque des revendications précédentes, **caractérisée en ce que** ladite structure de support (14) est réalisée à partir d'une première et d'une seconde demi-structures (22, 22) traversant respectivement lesdites première et seconde ouvertures du fuselage (18, 18), lesdites première et seconde demi-structures étant assemblées l'une à l'autre de manière démontable au sein dudit espace intérieur (8).

## Patentansprüche

1. Flugzeugheck (1) aufweisend:
einen Rumpf (6), welcher einen inneren Raum des Flugzeugs (8) abgrenzt;
mindestens zwei Motoren (10);
eine Trägerstruktur der Motoren (14), welche den Rumpf im Bereich einer ersten und einer zweiten Öffnung (18, 18) durchdringt, welche in diesen eingebracht sind und beiderseits einer mittleren, senkrechten Ebene (P) des Flugzeugs verteilt sind, wobei die Trägerstruktur ein erstes und ein zweites sich gegenüber liegendes Ende (20, 20) aufweist;
wobei jeweils das erste und zweite sich gegenüber liegende Ende der Trägerstruktur außerhalb des Rumpfes, jeweils beiderseits der vertikalen, mittleren Ebene vorspringt und den einen der Motoren trägt; und
Befestigungsmittel, welche die Trägerstruktur (14) mit dem Rumpf (6) verbinden, welche erste Befestigungsmittel, die die Struktur mit einem, die erste Rumpföffnung (18) bildenden ersten Rahmen (50) verbindet, und zweite Befestigungsmittel aufweist, welche die Struktur mit einem, die zweite Rumpföffnung (18) bildenden Rahmen (50) verbindet;
**dadurch gekennzeichnet, dass**
die Befestigungsmittel außerdem mindestens eine Stange zur Lastaufnahme (66) aufweisen, von der ein erstes Ende an der Trägerstruktur (14) montiert ist, und deren gegenüber liegendes Ende am Rumpf (6) von der ersten und zweiten Öffnung (18, 18) beabstandet montiert ist.

2. Flugzeugheck nach Anspruch 1, **dadurch gekennzeichnet, dass** die Stange zur Lastaufnahme (66) in Bezug auf eine senkrechte Richtung (Z) des Flugzeugs in Hinblick auf eine longitudinale Richtung (X) dieses letzteren geneigt ist.

3. Flugzeugheck nach Anspruch 1 oder Anspruch 2, **dadurch gekennzeichnet, dass** es mit zwei Stangen zur Lastaufnahme (66, 66) versehen ist, welche in Bezug auf die mittlere, vertikale Ebene (P) des Flugzeugs symmetrisch angeordnet sind.

4. Flugzeugheck nach Anspruch 3, **dadurch gekennzeichnet, dass** die Trägerstruktur (14) im Wesentlichen ein V bildet, und dass die beiden Stangen zur Lastaufnahme (66, 66) in Bezug auf jenes der Trägerstruktur zusammen im Wesentlichen ein umgekehrtes V bilden.

5. Flugzeugheck nach Anspruch 3 oder Anspruch 4, **dadurch gekennzeichnet, dass** die gegenüber liegenden Enden der beiden Stangen (66, 66) im Wesentlichen an einem gleichen Punkt am Rumpf (6) montiert sind, wobei dieser Punkt der mittleren, vertikalen Ebene des Flugzeugs angehört.

6. Flugzeugheck nach einem der vorhergehenden Ansprüche, **dadurch gekennzeichnet, dass** jede Stange zur Lastaufnahme (66) an seinen Enden gelenkig montiert ist.

7. Flugzeugheck nach einem der vorhergehenden Ansprüche, **dadurch gekennzeichnet, dass** jede Stange zur Lastaufnahme (66) oberhalb der Trägerstruktur montiert ist.

8. Flugzeugheck nach einem der vorhergehenden Ansprüche, **dadurch gekennzeichnet, dass** mindestens eine Stange zur Lastaufnahme (66) mit einem Resonator (150) ausgerüstet ist.

9. Flugzeugheck nach einem der vorhergehenden Ansprüche, **dadurch gekennzeichnet, dass** es mit mindestens zwei Stangen zur Lastaufnahme (66) versehen ist, welche an einer Traverse (158) angelenkt sind, welche selbst an der Trägerstruktur (14) oder am Rumpf (6) angelenkt ist.

10. Flugzeugheck nach einem der vorhergehenden Ansprüche, **dadurch gekennzeichnet, dass** die Trägerstruktur (14) aus einer ersten und einer zweiten Halb-Struktur (22, 22) ausgeführt ist, welche jeweils die erste und zweite Öffnung des Rumpfes (18, 18) durchdringen, wobei die erste und zweite Halb-Struktur innerhalb des inneren Raums (8) in abbaubarer Weise miteinander zusammengesetzt werden.

## Claims

1. A rear part of an aircraft (1) comprising:
- a fuselage (6) delimiting an inner area (8) of the aircraft;
- at least two engines (10);
- a support structure for the engines (14), passing through said fuselage at first and second openings (18, 18) formed therein and distributed on either side of a vertical middle plane (P) of the aircraft, said support structure having first and second opposite ends (20, 20);
- each of said first and second opposite ends of the support structure protruding outwardly from the fuselage, on either side of said vertical middle plane, respectively, and supporting one of said engines; and
- fastening means connecting said support structure (14) to the fuselage (6), comprising first fastening means connecting said structure to a first casing (50) forming said first fuselage opening (18) and second fastening means connecting said structure to a second casing (50) forming said second fuselage opening (18);
**characterized in that**
the fastening means also comprise at least one effort recovery connecting rod (66) whereof a first end is mounted on said support structure (14), and the opposite end of which is mounted on the fuselage (6), spaced away from the first and second openings (18, 18).

2. The rear part of an aircraft according to claim 1, **characterized in that** said effort recovery connecting rod (66) is inclined relative to a vertical direction (Z) of the aircraft, seen along a longitudinal direction (X) thereof.

3. The rear part of an aircraft according to claim 1 or claim 2, **characterized in that** two effort recovery connecting rods (66, 66) are provided, arranged symmetrically relative to said vertical middle plane (P) of the aircraft.

4. The rear part of an aircraft according to claim 3, **characterized in that** said support structure (14) substantially forms a V, and **in that** said two effort recovery connecting rods (66, 66) together substantially form an upside-down V relative to that of said support structure.

5. The rear part of an aircraft according to claim 3 or claim 4, **characterized in that** said opposite ends of the two connecting rods (66, 66) are mounted substantially at a same point on the fuselage (6), said point belonging to said vertical middle plane of the aircraft.

6. The rear part of an aircraft according to any one of the preceding claims, **characterized in that** each effort recovery connecting rod (66) is mounted articulated at its ends.

7. The rear part of an aircraft according to any one of the preceding claims, **characterized in that** each effort recovery connecting rod (66) is mounted above said support structure.

8. The rear part of an aircraft according to any one of the preceding claims, **characterized in that** at least one effort recovery connecting rod (66) is equipped with a resonator (150).

9. The rear part of an aircraft according to any one of the preceding claims, **characterized in that** at least two effort recovery connecting rods (66) are provided articulated on a plate (158), itself articulated on the support structure (14) or on the fuselage (6).

10. The rear part of an aircraft according to any one of the preceding claims, **characterized in that** said support structure (14) is made from first and second half-structures (22, 22) respectively passing through said first and second openings of the fuselage (18, 18), said first and second half-structures being assembled to each other so that they can be disassembled within said inner area (8).
